# DEMANDE DE BREVET EUROPEEN

(11) **EP 3 499 425 A1**
(43) Date de publication de la demande: **19.06.2019**
(21) Numéro de dépôt: 17306786.9
(22) Date de dépôt: 15.12.2017
(51) Int. Cl.: G06K 19/077

(54) **PROCEDE DE PERSONNALISATION / MARQUAGE D'UNE CARTE A PUCE**

(71) Demandeur: GEMALTO SA, 92190 Meudon (FR)
(72) Inventeur: BYRNE, David, 13881 GEMENOS Cedex (FR); BERTOLOTTI, Jean-Marie, 13881 GEMENOS Cedex (FR); DHERS, Gilles, 13881 GEMENOS Cedex (FR)

(57) **Abrégé**

L'invention concerne un procédé de personnalisation / marquage de carte à puce (1) à l'aide de motifs visibles (5-8) en surface de carte, ledit procédé comportant une étape d'embossage des motifs sur le corps (2) de carte, lesdits motifs présentant des zones en relief (16) s'étendant au-dessus d'une surface principale (3) du corps (2) de carte à puce ;
Le procédé est caractérisé en ce que le procédé comporte une étape d'arasage (17) au moins en partie desdites zones en relief (16) .

L'invention concerne également la carte obtenue.

## Description

### Domaine de l'invention.

L'invention concerne un procédé de personnalisation / marquage de carte à puce à l'aide de motifs visibles en surface de carte.

En particulier, le procédé comporte une étape d'embossage des motifs sur le corps de carte, lesdits motifs présentant des zones en relief s'étendant au-dessus d'une surface principale d'un corps de carte à puce.

Les motifs comprennent généralement des formes géométriques en deux ou trois dimensions ou des caractères alphanumériques, sur un corps de carte à puce.

L'invention trouve application notamment dans les cartes bancaires comportant au moins une surface réservée à un embossage selon un standard des cartes à puce bancaire. Elle peut trouver application aussi dans les cartes bancaires conforme au standard des cartes bancaires planes (non embossées).

L'invention peut concerner aussi la personnalisation ou le marquage de cartes à puce en général avec des motifs de personnalisation (distincts des caractères ou données alphanumériques (logos d'entreprise, dessins...)

### Art antérieur.

Les cartes bancaires comprennent une zone normalisée d'embossage pour recevoir des données de personnalisation bancaire tel un numéro bancaire, une date d'expiration, sous forme d'embossage. L'embossage consiste à poinçonner la carte avec un poinçon comportant un caractère (ou motif géométrique) à reproduire sur la carte. Une face de la carte comporte le caractère / motif en creux et l'autre face opposée comporte le même caractère en relief en dépassant de la surface de la carte.

D'autre part, il est connu de réaliser une personnalisation graphique sur le corps de carte notamment par impression 3D à jet d'encre.

### Problème technique.

Les clients bancaires se plaignent régulièrement de la longévité faible des impressions colorées lorsqu'elles sont appliquées sur les données alphanumériques embossées des cartes à puce (avec des motifs en relief). En quelques mois les cartes peuvent perdre le brillant des impressions colorées au sommet des zones embossées et il en résulte des cartes d'aspect terne avec un contraste insuffisant pour lire facilement les données de personnalisation de la carte.

En outre, le client est à la recherche de nouveaux aspects visuels de la personnalisation graphique sur les cartes de paiement. Les nouvelles méthodes apportant des nouveaux aspects peuvent inclure des techniques de jet d'encre, laser et thermique non durable.

L'invention propose de résoudre le problème technique de la durabilité du marquage coloré au sommet des zones embossées. Elle vise également à offrir un nouvel aspect visuel et mettre tous les caractères au même niveau par groupe de caractères.

Les caractères embossés (sans impression à leur sommet) sont également difficiles à lire selon l'éclairage disponible.

Les personnalisations graphiques réalisées par technique d'impression d'encre ne permettent pas de réaliser des prises d'empreinte carbonées comme pour une carte embossée. En outre, un marquage associé à un embossage (ou un embossage) est plus difficile à frauder qu'une impression en surface par exemple.

L'invention a pour objectif de résoudre ces problèmes.

### Résumé de l'invention.

L'invention consiste à usiner ou fraiser le haut des caractères embossés ou en relief, au lieu d'ajouter un marquage coloré sur le sommet des caractères (tipping en anglais).

L'invention propose préférentiellement de retirer (au niveau des zones embossées) la couche de protection (overlay en anglais) ainsi qu'une impression graphique existant en surface de la feuille centrale de la carte. Ainsi, la matière de cette couche centrale peut être rendue visible au niveau des caractères alphanumériques (ou motifs) embossés uniquement.

Les données personnalisées peuvent maintenant présenter vis-à-vis de l'extérieur, la couleur du matériau de coeur (ou autre couche interne). Cet aspect visuel demeure pendant toute la durée de vie de la carte et ne disparaît pas comme les impressions au sommet des caractères.

L'invention prévoit donc de personnaliser les cartes à puce en effectuant des motifs d'embossage sur un corps de carte à puce et de retirer une partie supérieure des embossages ainsi formés.

Ainsi, un retrait de matière, notamment par arasage mécanique, permet de faire apparaitre la matière située sous le sommet des caractères, lignes, points embossés. Cette matière a généralement une couleur différente de celle visible en surface de la carte afin de conserver un contraste suffisant.

La matière visible a avantageusement une couleur teintée dans la masse d'une des couches internes de la carte ; La couleur peut être blanche ou d'une autre couleur. Elle peut présenter des pigments luminescents, ou fluorescents, ou autre élément visuellement détectable. La surface visible des zones, lignes, points embossées est plate et parallèle à la surface principale de la carte et permet également une meilleure lisibilité sous l'effet d'une lumière quel que soit son angle incident.
A cet effet, l'invention a pour objet un procédé de personnalisation de carte à puce à l'aide de motifs visibles en surface de carte, ledit procédé comportant une étape d'embossage des motifs sur le corps de carte, lesdits motifs présentant des zones en relief s'étendant au-dessus d'une surface principale d'un corps de carte à puce ; Le procédé est caractérisé en ce qu'il comporte une étape d'arasage au moins en partie desdites zones en relief.

Selon d'autres caractéristiques :
- L'arasage est effectué de manière à faire apparaitre de la matière du corps de carte située sous une couche externe et/ou une couche d'impression graphique du corps de carte ;
- La matière mise à jour par l'arasage appartient à une couche colorée ou blanche interne au corps de carte ;
- L'arasage enlève une hauteur (H) de matière des motifs de manière à faire apparaitre de la matière du corps de carte située sous une couche externe et/ou une couche d'impression graphique du corps de carte. Par exemple, la hauteur enlevée peut aller de 5 µm (10 µm) (si la couche à enlever correspond à une impression), jusqu'à 500 µm si une couche colorée est enfouie très profondément;
- L'arasage est effectué de manière à avoir une largeur (L) de ligne de caractère comprise entre 0,2 mm à 1 mm pour des caractères alphanumériques ; Cette largeur (L) peut être plus importante notamment pour des motifs graphiques, géométriques, logos, etc. (ex. 0,5 cm à jusqu'à 2 ou 3 cm) ;
- L'arasage (17) est effectué de manière à mettre au jour en surface de la carte au moins deux couches de couleurs différentes (des motifs situés au même endroit ou endroits différents peuvent avoir une ou plusieurs couleurs différentes). Le cas échéant, l'arasage peut être effectué par voie de gravure chimique, ablation laser...

L'invention a également pour objet la carte obtenue correspondante. La carte à puce comporte des motifs embossés dont le sommet est arasé. La carte peut comprendre un arasage des motifs embossés mettant au jour de la matière située sous une couche externe de protection et/ou une impression graphique.

### Brève description des figures.

- La figure 1 illustre une carte à puce conforme à un mode de réalisation préféré de l'invention comportant des motifs embossés et arasés;
- La figure 2 illustre un détail agrandi d'un motif de la figure précédente ;
- La figure 3 illustre une étape d'arasage des motifs embossés et l'arasage obtenu en une passe de l'outil 17 (non à l'échelle);

### Description.

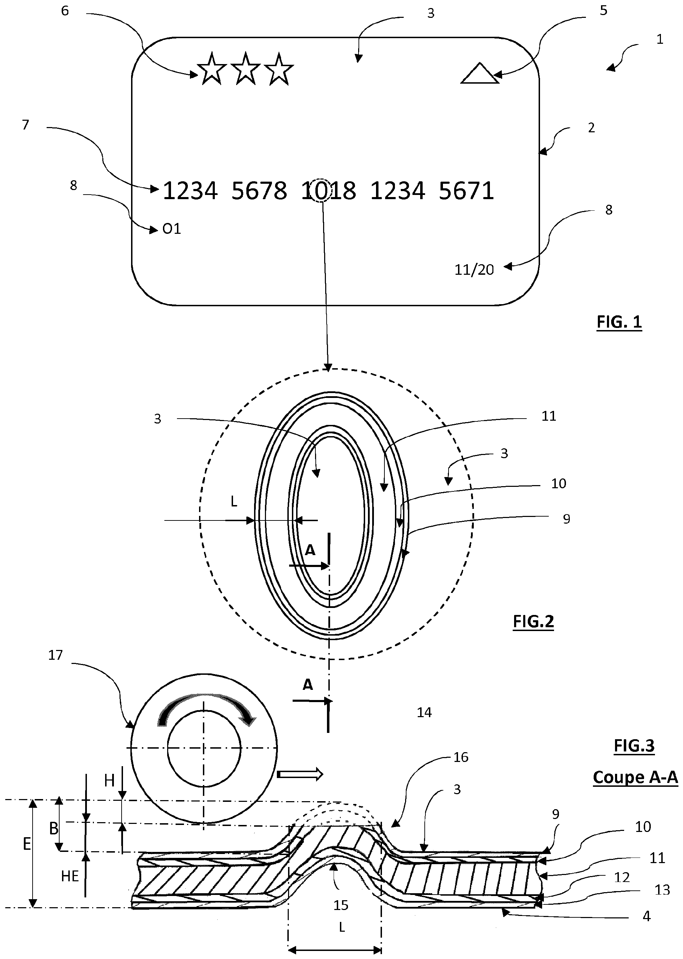

A la figure 1 est illustrée, une carte à puce 1 obtenue suite à la mise en oeuvre d'un procédé de personnalisation graphique réalisant des marquages de motifs visibles (ou visuels) 5-8 à la surface de la carte.

La carte comporte ici une surface principale 3 supérieure et une surface opposée d'épaisseur normalisée égale à 0,78 mm. Les dimensions correspondant de préférence à un standard ISO 7616 des cartes à puce. Toutefois, les cartes visées peuvent avoir des dimensions différentes de celles préconisées par le standard, notamment plus petites. Elles peuvent mettre en oeuvre une fonction radiofréquence.

Les motifs 5-8 comprennent de préférence des indications ou caractères alphanumériques. Dans l'exemple, ils sont spécifiques aux cartes bancaires tels que des numéros de carte bancaire 7, une date d'expiration 8 ;

La carte peut comporter, notamment pour des applications d'identité, d'accès, de fidélité..., également ou alternativement des motifs quelconques géométriques tels que des étoiles 6, des triangles 5, des lignes, des points, des logos d'entreprise, des marques figuratives de propriété intellectuelle etc.

Pour le marquage, le procédé effectue une étape d'embossage des motifs sur le corps 2 de carte ; Les motifs embossés présentent des zones en relief 16 s'étendant au-dessus de la surface principale 3 supérieure du corps 2 de carte. Les motifs apparaissent également sur la face opposée 4 mais en forme correspondante en creux 15. Une zone embossée comporte donc une partie en excroissance / saillie / en forme de bosse au-dessus de la surface générale d'une carte et une zone correspondant concave ou en creux du côté de la surface opposée.

Les embossages étant relativement plus difficiles à modifier qu'une impression graphique de données de personnalisation (après fabrication / lamination de la carte), ils permettent d'authentifier d'avantage la marque correspondante.
Toutes les couches (strates) de la carte situées dans la zone embossée sont déformées par voie de conséquence comme cela apparait sur la figure 3. Les couches inférieures (notamment celle du coeur) se voient propulsées à un niveau dépassant le niveau supérieur de la surface générale / principale 3 de la carte. Par exemple la couche 11 (âme ou de coeur) située au centre de la carte, se voit projetée / décalée vers et au-delà de la surface 3, d'un écart « B » suffisant pour faire apparaitre la couche 11. L'écart peut être par exemple d'environ 0,5 mm.

Les motifs sont obtenus par des poinçons qui ont des formes correspondantes aux motifs. Les poinçons emboutissent les cartes aux endroits réservés aux marquages pour y former des zones (ou des marquages) embossées.

Alternativement, l'invention peut viser également les cartes obtenues par moulage / surmoulage ou injection, ou injection mono ou multi matières ou co-extrusion multi matières. Donc une des couches peut être de couleurs différentes. Elle peut le cas échéant comporter un corps de carte constitué d'une couche homogène de matière (hormis, l'impression et couche de protection). Dans ce cas, c'est une couche unique qui est embossée. La carte peut être moulée ou injectée plutôt que laminée (stratifiée). Elle peut comporter une impression graphique en surface associée ou non à un vernis ou couche de protection (overlay).

Selon une caractéristique, le procédé du mode préféré de l'invention comporte une étape d'arasage 17 effectuée de manière à araser au moins en partie desdites zones en relief 16. Cette étape est illustrée à la figure 3.

L'arasage peut être réalisé par fraisage, usinage, rectification du sommet 14 des zones 16 en relief des motifs. Dans l'exemple, est illustrée une rectifieuse à disque rotatif et axe horizontal. La largeur de passe de l'outil peut correspondre à la largeur de la carte ou concerner uniquement la largeur du numéro de carte bancaire de manière à le mettre plus en valeur ou plus visible.

L'arasage apporte une largeur « L » souhaitée de ligne de caractère. Les caractères présentent une surface plane à leur sommet. Ainsi, sous une lumière incidente, chaque caractère est plus visible / contrasté que lorsqu'il présentait, dans l'art antérieur, une surface supérieure bombée dispersant une lumière sous un angle incident.
L'arasage peut également être effectué sélectivement sur l'un ou l'autre motif.

Le cas échéant, l'arasage ou mise au jour de la matière interne du corps de carte au niveau de l'embossage, peut être effectuée par voie chimique, (gravure, ablation laser ou autre).

Selon une caractéristique, du mode préféré, l'arasage est effectué de manière à faire apparaitre de la matière 11 du corps de carte 2 située sous une couche externe 9 ou une impression du corps de carte.

Dans l'exemple (fig. 3), le corps de carte est formé de plusieurs couches laminées ensembles. Il comprend des couches de protection externe supérieure 9 et inférieure 13 ; Il comprend une couche principale de coeur 11 prise en sandwich entre une couche 10 et une couche 12. Ces couches sont généralement en matière plastique couramment utilisée dans l'industrie de la carte à puce, tels que PC, PET, PE, ABS.

L'impression est généralement protégée par une couche de protection 9 (comme à la figure 3). Elle peut être imprimée sur une face des couches 9 ou 10 à leur interface.

On observe qu'au cours de l'usinage 17, la meule effectue une passe de hauteur ou profondeur P sur le motif de la figure 2, représentant un zéro.

Suite à cette passe, la matière de la couche 11 est mise au jour par l'arasage. Avantageusement, l'invention prévoit une couleur de la couche 11 qui contraste avec celle de la surface 3 du corps de carte. De préférence, la matière de la couche centrale 11 mise au jour, appartient à une couche interne au corps de carte et qui est colorée ou blanche.

Ainsi, l'invention peut personnaliser la couleur des caractères ou des motifs selon le choix du client de manière à avoir un effet visuel contrasté et améliorer la visibilité. La couleur des motifs a l'avantage d'être teintée dans la masse de la couche et ne risque pas d'être usée avec le temps.

La couleur des motifs est déterminée au préalable de la fabrication de la carte ou de la personnalisation graphique ou de l'embossage, par le choix des couleurs des couches de matière qui composent le corps de carte.

Le cas échéant, les couches du corps de carte peuvent demeurer blanches simplement du fait d'une utilisation de couches plastiques comportant notamment de l'oxyde de titane.

Le contraste des motifs apparaissant en blanc peut alors être obtenu avec toute autre couleur de l'impression graphique de la carte. Généralement, l'impression graphique est située sous une couche transparente de protection placée en couche externe du corps de carte (transparent overlay en anglais).

L'arasage peut enlever par exemple une hauteur « H » de matière des motifs, minimale de 10 µm (compte tenu d'une impression de 5 µm ou 10 µm) et/ou minimale d'un overlay (couche de protection transparente) allant de 50 µm à 200 µm. De préférence, on effectue une passe d'usinage de manière à ce que les caractéristiques de l'embossage de la carte à puce demeurent conformes au standard VISA / MASTERCARD réglementant l'embossage.

L'embossage et arasage peuvent être réalisés de manière à demeurer conformes à la norme d'embossage IS010373. Ainsi, certains caractères alphanumériques, par exemple les numéros de carte bancaire 7 peuvent avoir une hauteur « H » comprise entre 400 et 480 µm. Les autres caractères alphanumériques 8 distincts des numéros bancaires 7 (comprenant le PAN), peuvent avoir une hauteur « H » comprise entre 360 µm et 460 µm.

L'arasage peut être effectué également de manière optimale pour avoir une largeur (L) de ligne de caractère comprise entre 0,2 mm à 1 mm pour des caractères alphanumériques ; Cette largeur (L) peut être plus importante notamment pour des motifs graphiques, géométriques, logos, etc. (ex. jusqu'à quelques centimètres).

Ainsi, l'invention permet d'avoir des marquages colorés de toutes dimensions, durables, de visibilité améliorée et correspondant à des embossages (reliefs associés sur les deux faces opposées de la carte) pour plus de sécurité.

Selon la composition et couleurs des couches, l'invention permet d'effectuer un arasage de manière à mettre au jour en surface au moins deux couches de couleur différentes. Ainsi, dans l'exemple, la couche 11 peut être en blanc ou rouge et la couche 10 peut être en noir de manière à souligner le contraste et augmenter la netteté du contour des motifs.

De même, seule une couche peut être mise au jour (ou révélée) selon la profondeur de passe « H » de l'outil d'usinage et selon la position de la couche en hauteur dans l'épaisseur du corps de carte. Ainsi, par exemple, si l'arasage est réglé de manière à usiner uniquement la couche 10 et pas la couche 11, la couleur visible des motifs correspondra à celle de la couche 10.

L'invention permet donc d'obtenir ainsi une carte à puce (contact et/ou ou sans contact) comportant des motifs embossés, et dont le sommet (14) des motifs est arasé. Elle permet de varier les couleurs de motifs selon les couches internes colorées superposées composant le corps de carte. Chaque couche colorée interne peut, par exemple, avoir une épaisseur d'environ 10 µm à 20 µm (ou 50 µm) selon la tolérance d'usinage disponible. Ainsi, on peut avoir les caractères 7 d'une couleur et les caractères 8 d'une autre couleur. On peut varier aussi la largeur des caractères selon le groupe auquel il appartient selon le degré de visibilité souhaité.

La carte à puce obtenue peut comprendre des motifs 5-8 en relief et arasés d'une hauteur résiduelle « HE » conforme ou pas à la norme ISO 10373.

La carte peut continuer à être conforme au standard des embossages VISA, MASTERCARD. Le cas échéant, l'invention permet de régler la hauteur des embossages pour qu'ils soient plus accentués en hauteur de bosse 14 (par rapport à la hauteur maximale standard) ou alternativement plus profond en creux 15 d'une dimension égale à « H » (fig. 3). Puis par arasage, l'invention rétablit cette hauteur standard par retrait de matière excédentaire du sommet des motifs embossés tout en obtenant la couleur désirée des motifs (ou caractères).

La carte se caractérise également par une profondeur du creux 15 sur la surface inférieure 4 plus importante que la hauteur résiduelle de la bosse correspondante sur la face opposée supérieur 3. La différence correspond environ à la hauteur de passe « H ». L'épaisseur de la carte au niveau de l'embossage peut être affaiblie à la fois par l'opération de compression du poinçonnage / embossage et celle de l'arasage.

L'épaisseur résiduelle de la carte précisément au niveau de l'embossage (mesure de l'épaisseur résiduelle de la carte entre le fond d'un creux d'embossage d'un côté verso de la carte et le sommet correspondant au creux s'étendant sur le côté verso opposé de la carte) peut être comprise entre 100 µm et 750 µm. De préférence, l'épaisseur est comprise entre 500 µm et 70 µm.

La couche de « l'overlay » et de l'impression retirée peuvent totaliser environ de 50 µm à 200 µm. La couche de couleur interne à araser (usiner) peut avoir environ 20 µm à 500 µm d'épaisseur. Elle peut être elle-même arasée d'une hauteur de 5 (ou 10 µm) à 40 µm. L'usinage peut affleurer la couche colorée et juste enlever de la matière située au-dessus.
La couche 10 fig. 3 peut représenter une impression d'environ 10 µm ou une couche de plastique par exemple de 50 µm.

## Revendications

1. Procédé de personnalisation de carte à puce (1) à l'aide de motifs visibles en surface de carte (5-8), ledit procédé comportant une étape d'embossage des motifs sur le corps (2) de carte, lesdits motifs présentant des zones en relief (16) s'étendant au-dessus d'une surface principale (3) d'un corps (2) de carte à puce, **caractérisé en ce que** le procédé comporte une étape d'arasage (17) au moins en partie desdites zones en relief (16) .

2. Procédé selon la revendication précédente, **caractérisé en ce que** lesdits motifs (5-8) comportent ou forment des caractères alphanumériques (7) ou des lignes, des points, des motifs géométriques (5, 6), des logos.

3. Procédé selon l'une des revendications précédentes, **caractérisé en ce que** l'arasage (17) est réalisé par fraisage, usinage, rectification du sommet (14) des zones (16) en relief.

4. Procédé selon l'une des revendications précédentes, **caractérisé en ce que** l'arasage est effectué de manière à faire apparaitre de la matière (11) du corps de carte (2) située sous une couche externe (9) et/ou couche d'impression graphique.

5. Procédé selon la revendication précédente, **caractérisé en ce que** la matière (11) mise au jour par l'arasage appartient à une couche colorée ou blanche interne au corps de carte.

6. Procédé selon l'une des revendications précédentes, **caractérisé en ce que** l'arasage enlève une hauteur (H) de matière au niveau des motifs comprise entre 10 µm et 500 µm.

7. Procédé selon l'une des revendications précédentes, **caractérisé en ce que** l'arasage est effectuée de manière à avoir une largeur (L) de ligne de caractère au moins comprise entre 0,2 mm et 1 mm.

8. Procédé selon l'une des revendications précédentes, **caractérisée en ce que** l'arasage (17) est effectué de manière à mettre au jour en surface au moins deux couches de couleurs différentes.

9. Carte à puce comportant des motifs embossés, **caractérisé en ce que** le sommet (14) des motifs embossés (5-8) est arasé.

10. Carte à puce selon la revendication précédente, **caractérisée en ce qu'**elle comprend un arasage des motifs embossés mettant au jour de la matière (10, 11) située sous une couche externe (9) de protection et/ou une couche d'impression graphique.

11. Carte à puce selon l'une des revendications 9 ou 10, **caractérisée en ce que** les motifs (5-8) en relief arasés ont une hauteur (HE) conforme à la norme IS010373.
